# FASCICULE DE BREVET EUROPEEN

(11) **EP 1 319 027 B1**
(45) Date de publication et mention de la délivrance du brevet: **15.03.2006**
(21) Numéro de dépôt: 01969876.0
(22) Date de dépôt: 11.09.2001
(51) Int. Cl.: C08F 2/38, C08F 293/00, C08F 8/34

(54) **PROCEDE DE SYNTHESE DE POLYMERES A BLOCS PAR POLYMERISATION RADICALAIRE CONTROLEE EN PRESENCE D'UN COMPOSE DISULFURE**
VERFAHREN ZUR HERSTELLUNG VON BLOCKCOPOLYMEREN DURCH EINE KONTROLLIERTE RADIKALPOLYMERISATION IN GEGENWART VON EINER DISULFIDVERBINDUNG
METHOD FOR BLOCK POLYMER SYNTHESIS BY CONTROLLED RADICAL POLYMERISATION IN THE PRESENCE OF A DISULPHIDE COMPOUND

(30) Priorité: 18.09.2000 FR 0011877
(43) Date de publication de la demande: 18.06.2003
(73) Titulaire: RHODIA CHIMIE, 92512 Boulogne Billancourt Cedex (FR)
(72) Inventeur: DESTARAC, Mathias, F-75012 PARIS (FR)
(74) Mandataire: Andrieu, Isabelle A. J.
(86) Numéro de dépôt international: PCT/FR2001/002821
(87) Numéro de publication internationale: WO 2002/022688

(56) Documents cités:
- EP-A- 0 348 166
- DD-A- 156 600
- DE-A- 2 756 218
- FR-A- 2 764 892
- GB-A- 2 204 050
- OKAWARA M ET AL: "SYNTHESES AND PHOTOCHEMICAL REACTIONS OF POLYMERS CONTAINING DITHIOCARBAMATE AND XANTHATE GROUPS AND THEIR MODEL COMPOUNDS" , BULLETIN OF THE TOKYO INSTITUTE OF TECHNOLOGY,JP,TOKYO, NR. 78, PAGE(S) 1-16 XP002049822 ISSN: 0366-3736 Entire doct.
- DATABASE WPI Section Ch, Week 198728 Derwent Publications Ltd., London, GB; Class A12, AN 1987-196461 XP002188157 & JP 62 127330 A (ASAHI CHEM IND CO LTD), 9 juin 1987 (1987-06-09)

## Description

La présente invention concerne un nouveau procédé de polymérisation radicalaire donnant accès à des polymères à blocs.

Les polymères à blocs sont habituellement préparés par polymérisation ionique. Ce type de polymérisation présente l'inconvénient de ne permettre la polymérisation que de certains types de monomères apolaires, notamment le styrène et le butadiène, et de requérir un milieu réactionnel particulièrement pur et des températures souvent inférieures à l'ambiante de manière à minimiser les réactions parasites, d'où des contraintes de mise en oeuvre sévères.

La polymérisation radicalaire présente l'avantage d'être mise en oeuvre facilement sans que des conditions de pureté excessives soient respectées et à des températures égales ou supérieures à l'ambiante. Cependant, jusqu'à récemment il n'existait pas de procédé de polymérisation radicalaire permettant d'obtenir des polymères à blocs.

En polymérisation radicalaire conventionnelle, les macroradicaux en croissance ont une réactivité non-sélective : les chaînes se terminent de façon irréversible par couplage ou dismutation. Par conséquent, il est très difficile de contrôler la structure des chaînes. Les possibilités d'obtenir des polymères fonctionnels, téléchéliques ou des copolymères à blocs sont très limitées. Récemment, un nouveau procédé de polymérisation radicalaire s'est développé : il s'agit de la polymérisation radicalaire dite "contrôlée" ou "vivante". Plusieurs techniques ont été mises au point, dans lesquelles les extrémités de chaînes polymères peuvent être réactivées grâce à une réaction de terminaison ou de transfert réversible (équilibre espèce dormante/espèce active).

La polymérisation radicalaire contrôlée présente les aspects distinctifs suivants :
1. le nombre de chaînes est fixe pendant toute la durée de la réaction,
2. les chaînes croissent toutes à la même vitesse, ce qui se traduit par :
   - une augmentation linéaire des masses moléculaires avec la conversion,
   - une distribution des masses resserrée,
3. la masse moléculaire moyenne est contrôlée par le rapport molaire monomère /précurseur de chaîne,
4. la possibilité de préparer des copolymères à blocs.

Le caractère contrôlé est d'autant plus marqué que la vitesse de réactivation des chaînes en radical est très grande devant la vitesse de croissance des chaînes (propagation). Il existe des cas où ce n'est pas toujours vrai (i.e. la vitesse de réactivation des chaînes en radical est inférieure à la vitesse de propagation) et les conditions 1 et 2 ne sont pas observées, néanmoins, il est toujours possible de préparer des copolymères à blocs.

Récemment, des procédés de polymérisation radicalaire vivante par amorçage thermique ont été développés. Par exemple, les demandes de brevet PCT WO 98/01478 au nom de Dupont de Nemours et WO 99/35178 au nom de Rhodia Chimie décrivent l'utilisation d'agents de transfert réversible par addition-fragmentation de type dithioester RSC=SR' pour la synthèse de copolymères à architecture contrôlée. Une autre famille d'agents de transfert réversible, les xanthates RSC=SOR', ont été décrits dans la demande de brevet WO 98/58974 de la société Rhodia Chimie comme précurseurs de copolymères à blocs. Le contrôle de la polymérisation radicalaire par des dithiocarbamates RS(C=S)NR₁R₂ a également été récemment décrit dans les demandes de brevets WO 99/35177 au nom de Rhodia et WO 99/31144 au nom de Dupont de Nemours.

La polymérisation radicalaire contrôlée présente un avantage sur la polymérisation radicalaire conventionnelle lorsqu'il s'agit de préparer des chaînes de bas poids moléculaires et fonctionnalisées (télomères réactifs). De tels polymères sont recherchés pour des applications spécifiques telles que, par exemple, revêtements et adhésifs.

Ainsi, lorsque l'on cherche à synthétiser des chaînes greffées avec en moyenne 2 comonomères fonctionnels, la fraction de chaînes avec au plus un site fonctionnel devient importante quand le degré de polymérisation moyen est inférieur à une valeur seuil (e.g. 20 ou 30). La polymérisation radicalaire contrôlée permet, elle, de réduire, voire inhiber, la formation de ces oligomères à zéro ou un site fonctionnel qui dégradent les performances en application.

Dans la suite de la description, le terme polymère est utilisé pour décrire des homopolymères ou des copolymères sauf indication contraire.

De plus, on entend par polymère à blocs un copolymère comprenant au moins deux enchaînements successifs de blocs d'unités monomères de constitutions chimiques différentes. Les blocs peuvent être constitués d'un homopolymère ou d'un polymère obtenu à partir d'un mélange de monomères éthyléniquement insaturés. Dans ce cas, le bloc peut être un copolymère statistique. Le copolymère à blocs peut comprendre deux blocs constitués, chacun, de copolymères statistiques. Dans ce cas, les monomères éthyléniquement insaturés sont tels que les blocs obtenus sont de natures différentes. Par natures différentes, on entend des blocs constitués de monomères de types différents, mais aussi des blocs constitués de monomères de même type mais dans des quantités différentes.

Un but de la présente invention est de proposer un nouveau procédé de polymérisation radicalaire qui présente une efficacité améliorée et un meilleur contrôle de la formation du polymère.

Ce but et d'autres qui apparaîtront dans la lecture de la description sont atteints par la présente invention qui concerne un procédé de préparation d'un polymère de première génération qui comprend une étape de polymérisation radicalaire d'une composition comprenant :
- au moins un monomère éthyléniquement insaturé,
- une source de radicaux libres,
- au moins un composé (I) de formule générale (IA) ou (IB) : 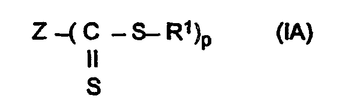 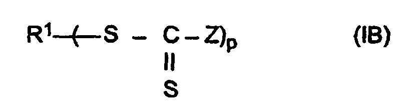
- un composé de formule (II)

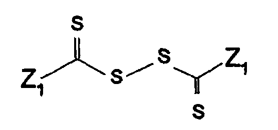

dans lesquelles
- R¹ représente un groupe choisi parmi les groupes alkyle, acyle, aryle, aralkyle, alcène ou alcyne, les cycles carbonés ou les hétérocycles, saturé ou non, aromatique, ou une chaîne polymère,
- Z et Z₁, identique ou différent, représentent un groupe choisi parmi
   - les groupes alkyle, acyle, aryle, aralkyle, alcène ou alcyne, les cycles carbonés ou les hétérocycles, saturé ou non, ou aromatique, éventuellement substitué,
   - le groupe -OR² dans lequel R² est un groupe alkyle, acyle, aryle, aralkyle, alcène ou alcyne, un cycle carboné ou un hétérocycle, saturé ou non, aromatique, une chaîne polymère, -CH₂CₙF₂ₙ₊₁ avec n compris entre 1 et 20, un groupe -CR⁵R⁸PO(OR⁷)₂ dans lequel R⁵ et R⁶, sont chacun séparément, un atome d'hydrogène, un halogène, un groupe alkyle, un groupe hétérocyclique, un groupe -NO₂, -SO₃R⁸, -NCO, CN, R⁸, -OR⁸, -SR⁸, -NR⁸₂, -COOR⁸, O₂CR⁸, -CONR⁸₂, -NCOR⁸₂, CₙF₂ₙ₊₁ avec n compris entre 1 et 20, R⁸, identiques ou différents étant choisi parmi un groupe comprenant les groupes alkyle, alcényle, alcynyle, cycloalcényle, cycloalcynyle, aryle, éventuellement condensé à un hétérocycle aromatique ou non, alkaryle, aralkyle, hétéroaryle, R⁸ pouvant être substitué par un ou plusieurs groupes identiques ou différents choisis parmi halogène, =O, =S, OH, alcoxy, SH, thioalcoxy, NH2, mono ou di-alkylamino, CN, COOH, ester, amide, CₙF₂ₙ₊₁ avec n compris entre 1 et 20, et/ou éventuellement interrompu par un ou plusieurs atomes choisis parmi O, S, N, P, ou R⁵ et R⁶ forment ensemble avec l'atome de carbone auxquels ils sont attachés un groupe =O ou =S ou un cycle hydrocarboné ou un hétérocyde, R⁷, identique ou différent, représente un groupe R⁸ tel que défini précédemment ou forment ensemble une chaîne hydrocarboné en C₂-C₄, éventuellement interrompu par un hétéroatome choisi parmi O, S et N ;
   - le groupe -NR³R⁴ dans lequel R³ et R⁴, identiques ou différents, sont choisis parmi les groupes, éventuellement substitués, alkyle, acyle, aryle, aralkyle, alcène ou alcyne, les cycles carbonés ou les hétérocycles, saturé ou non, ou aromatique, éventuellement substitué et R³ et R⁴ ensemble forment un cycle éventuellement substitué contenant au moins 5 chaînons, avec la condition supplémentaire que R³ et R⁴ induisent un effet de délocalisation ou électro-attracteur vis-à-vis de la densité électronique de l'atome d'azote,
- p est un nombre entier supérieur ou égal à 1.

L'invention concerne aussi un procédé de préparation d'un polymère à blocs.

Un avantage du procédé de l'invention est qu'il permet, pour des systèmes monomères-composé (I) peu actifs, de rendre pratiquement linéaire révolution de la masse moléculaire (Mn) en fonction du taux de conversion des monomères. On peut ainsi obtenir pour des taux de conversion faibles, des masses moléculaires faibles sans pour autant augmenter le rapport molaire Composé (I)/Monomère.

Un autre avantage est que le composé (II) utile dans le procédé de l'invention permet d'accélérer la consommation du composé (I) en cours de réaction. Ce procédé est particulièrement intéressant lorsque le composé (I) présente une faible réactivité vis-à-vis du monomère mis en oeuvre.

En effet, pour des systèmes monomères-composé (I) peu actifs, la composition polymère résultante contient une quantité résiduelle de composé (I). La présence de cette quantité résiduelle de composé (I) perturbe la formation ultérieure de copolymère à blocs. Il est donc particulièrement avantageux de disposer d'un procédé de synthèse qui permet de réduire la quantité résiduelle de composé (I) dans la composition polymère obtenue.

Les groupes R¹ ,R², R³ ,R⁴ ,R⁵, R⁶, R⁷, R⁸, Z et Z¹ peuvent être des groupes linéaires ou ramifiés, substitués ou non. Les substituants peuvent être choisis parmi des groupes phényles, des groupes aromatiques, des cycles carbonés saturés ou non, des hétérocycles saturé ou non, ou des groupes : alkoxycarbonyle ou aryloxycarbonyle (-COOR), carboxy (-COOH), acyloxy (-O₂CR) carbamoyle (-CONR₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR₂), halogène, perfluoroalkyle CₙF₂ₙ₊₁, allyle, époxy, alkoxy (-OR), S-alkyle, S-aryle, des groupes présentant un caractère hydrophile ou ionique tels que les sels alcalins d'acides carboxyliques, les sels alcalins d'acide sulfonique, les chaînes polyoxyde d'alkylène (PEO, POP), les substituants cationiques (sels d'ammonium quaternaires), R représentant un groupe alkyle ou aryle, ou une chaîne polymère.

Dans le composé (I) de formule générale (IA) ou (IB), p est de préférence compris entre 1 et 10, de préférence compris entre 1 et 5. Lorsque p est supérieur à 1 alors les groupes R¹ et/ou Z peuvent être identiques ou différents.

Selon un mode de réalisation particulier, R¹ est un groupe alkyle, de préférence substitué. Le groupe R¹ est par exemple choisi parmi les groupes alkyles substitués suivants:
- CH₂C₆H₅
- CH(CH₃)(CO₂Et)
- CH(CH₃)CO2Me)
- CH(CH₃)(C₆H₅)
- CH(CO₂Et)₂
- C(CH₃)(CO₂Et)(S-C₆H₅)
- C(CH₃)₂(C₆H₅)
- C(CH₃)₂CN

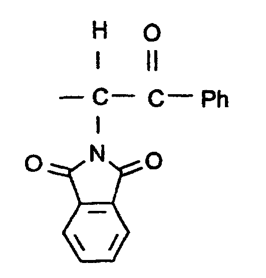

dans lesquels Et représentent un groupe éthyle, Me un groupe méthyle et Ph un groupe phényle.

Lorsque R¹ est une chaîne polymère, cette chaîne polymère peut être issue d'une polymérisation radicalaire ou ionique ou issue d'une polycondensation.

Selon un mode de réalisation particulier, le composé (I) est tel que le groupe Z est choisi parmi les groupes alkyle, -OR², R² étant un groupe alkyle comprenant de 1 à 20 atomes de carbone, un groupe aryle, aralkyle ou -CH₂CₙF₂ₙ₊₁ avec n compris entre 1 et 20 ; -NR³R⁴ dans lequel R³ et R⁴, identiques ou différents, sont un groupe alkyle comprenant de 1 à 20 atomes de carbones.

Selon un mode de réalisation particulièrement préféré, les composés (I) présente une réactivité vis-à-vis du monomère telle que le composés (I) présente une constante de transfert (Ctr) inférieure à 10 vis-à-vis du monomère.

La constante de transfert (Ctr) est définie par le rapport des constantes de vitesse de transfert et de propagation à conversion nulle en composé (I) et en monomère. La constante de transfert peut être mesurée par la loi de Mayo telle que décrite dans J. Am.Chem.Soc., 65, 2324 (1943)

Dans le procédé de la présente invention, la constante de transfert du composé (I) vis-à-vis du monomère est de préférence inférieure à 1. De tels composés sont par exemple, des systèmes monomères/composé (I) tels que le système méthacrylate de méthyle/S-propionyl O-éthyl xanthate ou le système styréne/S-benzyl O-éthyl xanthate.

Les composés (I) sont facilement accessibles. Ceux pour lesquels Z est -OR² dans lequel R² est un groupe alkyle, dits xanthates d'alkyle, peuvent notamment être obtenus par réaction entre un sel de xanthate, tel qu'un sel alcalin du type : 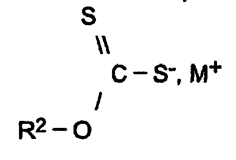
et un dérivé halogéné du type : Hal - R¹ avec Hal choisi parmi Cl, Br ou I.

Les composés (I) peuvent également être obtenus par le procédé dans lequel on mélange et on chauffe :
- un composé disulfuré (S) de formule (A) :

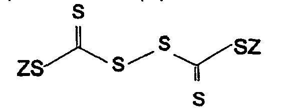

et un composé diazoïque de formule :

R¹-N =N-R¹

dans lesquelles R¹ et Z sont tels que définis précédemment.

La quantité de composé (I) est fonction de la masse moléculaire du polymère désirée selon la loi Mn_{théorique}= [M]₀/[I]₀ x Taux de conversion + MW(I) dans laquelle M₀ est la concentration initiale en monomères, [I]₀ est la concentration initiale en composé (I) et MW(I) la masse moléculaire du composé (I).

Le composé (II) utile est tel que les groupes Z₁ sont identiques ou différents. Selon un mode de réalisation particulier, Z₁ est -OR² dans lequel R² est un radical alkyle. Par exemple, R² est un groupe méthyle, éthyle, propyle, etc , linéaire ou ramifié, substitué ou non. Z¹ peut être-OC₂H₅, -OCH₂CF₃.

Les procédés de préparation de ces composés (II) sont largement décrits dans la littérature. Ces composés peuvent être obtenus par oxydation du sel de xanthate correspondant Z¹(C=S)S⁻M⁺ par de l'iode.

La quantité de composé (II) dans la composition utile dans le cadre de l'invention peut être très variable cependant on préfère une quantité de composés (II) comprise entre 0,1 et 20 % en mole par rapport au nombre de mole de composé (I). De préférence, cette quantité est comprise entre 1 et 10 %.

Le procédé de l'invention est dans tous les cas mis en oeuvre en présence d'une source de radicaux libres, ces radicaux libres pouvant être générés par le monomère lui même ou par le composé (II) dans les conditions de polymérisation. En effet, pour certains monomères, tels que le styrène, les radicaux libres permettant d'initier la polymérisation peuvent être générés par le monomère à insaturation éthylénique, lui-même à des températures suffisamment élevées généralement supérieure à 100°C. Il n'est pas, dans ce cas, nécessaire d'ajouter une source de radicaux libres supplémentaires. Il en est de même avec les composés (II).

La source de radicaux libres utile dans le procédé de la présente invention est généralement un initiateur de polymérisation radicalaire. L'initiateur de polymérisation radicalaire peut être choisi parmi les initiateurs classiquement utilisés en polymérisation radicalaire. Il peut s'agir par exemple d'un des initiateurs suivants :
- les peroxydes d'hydrogène tels que : l'hydroperoxyde de butyle tertiaire, l'hydroperoxyde de cumène, le t-butyl-peroxyacétate, le t-butylperoxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle, le persulfate de potassium, le persulfate d'ammonium,
- les composés azoïques tels que : le 2-2'-azobis(isobutyronitrile), le 2,2'-azobis(2-butanenitrile), le 4,4'-azobis(4-acide pentanoïque), le 1,1'-azobis(cyclohexanecarbonitrile), le 2-(t-butylazo)-2-cyanopropane, le 2,2'-azobis[2-méthyl-N-(1,1)-bis(hydroxyméthyl)-2-hydroxyéthyl] propionamide, le 2,2'-azobis(2-méthyl-N-hydroxyéthyl]-propionamide, le dichlorure de 2,2'-azobis(N,N'-diméthylèneisobutyramidine), le dichlorure de 2,2'-azobis (2-amidinopropane), le 2,2'-azobis (N,N'-diméthylèneisobutyramide), le 2,2'-azobis(2-méthyl-N-[1,1-bis (hydroxyméthyl)-2-hydroxyéthyl] propionamide), le 2,2'-azobis(2-méthyl-N-[1,1-bis (hydroxyméthyl)éthyl] propionamide), le 2,2'-azobis[2-méthyl-N-(2-hydroxyéthyl) propionamide], le 2,2'-azobis(isobutyramide) dihydrate,
- les systèmes redox comportant des combinaisons telles que :
   - les mélanges de peroxyde d'hydrogène, d'alkyle, peresters, percarbonates et similaires et de n'importe lequel des sels de fer, de sels titaneux, formaldéhyde sulfoxylate de zinc ou formaldéhyde sulfoxylate de sodium, et des sucres réducteurs,
   - les persulfates, perborate ou perchlorate de métaux alcalins ou d'ammonium en association avec un bisulfite de métal alcalin, tel que le métabisulfite de sodium, et des sucres réducteurs,
   - les persulfate de métal alcalin en association avec un acide arylphosphinique, tel que l'acide benzène phosphonique et autres similaires, et des sucres réducteurs.

Selon un mode de réalisation, la quantité d'initiateur à utiliser est déterminée de manière à ce que la quantité de radicaux générés soit d'au plus 50 % en mole par rapport à la quantité de composé (III), de préférence d'au plus 20 % en mole.

Les monomères éthyléniquement insaturés utiles dans le procédé de la présente invention sont tous les monomères qui polymérisent en présence des composés (I) et (II), pour donner des chaînes polymères actives.

Ces monomères éthyléniquement insaturés sont par exemple
- le styrène et les dérivés du styrène comme l'alphaméthylstyrène ou le vinyltoluène
- les esters vinyliques d'acide carboxylique comme l'acétate de vinyle, le Versatate® de vinyle, le propionate de vinyle,
- les halogénures de vinyle,
- les acides mono- et di- carboxyliques insaturés éthyléniques comme l'acide acrylique, l'acide méthacrylique, l'acide itaconique, l'acide maléique, l'acide fumarique et les mono-alkylesters des acides dicarboxyliques du type cité avec les alcanols ayant de préférence 1 à 4 atomes de carbone et leurs dérivés N-substitués,
- les amides des acides carboxyliques insaturés comme l'acrylamide, le méthacrylamide, le N-méthylolacrylamide ou méthacrylamide, les N-alkylacrylamides.
- les monomères éthyléniques comportant un groupe acide sulfonique et ses sels alcalins ou d'ammonium par exemple l'acide vinylsulfonique, l'acide vinylbenzène sulfonique, l'acide alpha-acrylamido méthylpropane-sulfonique, le 2-sulfoéthylène-méthacrylate,
- les amides de la vinylamine, notamment le vinylformamide ou le vinylacétamide,
- les monomères éthyléniques insaturés comportant un groupe amino secondaire, tertiaire ou quaternaire, ou un groupe hétérocyclique contenant de l'azote tel que par exemple les vinylpyridines, le vinylimidazole, les (méth)acrylates d'aminoalkyle et les (méth)acrylamides d'aminoalkyle comme le diméthylaminoéthyl-acrylate ou -méthacrylate, le ditertiobutylaminoéthyl-acrylate ou -méthacrylate, le diméthylamino méthyl-acrylamide ou - méthacrylamide, ou des monomères zwitterioniques comme par exemple l'acrylate de sulfopropyl (diméthyl)aminopropyle,
- les diènes par exemple le butadiène, le chloroprène,
- les esters (méth)acryliques,
- les nitriles vinyliques.
- l'acide vinylphosphoniques et ses dérivés.

Par esters (méth)acryliques, on désigne les esters de l'acide acrylique et de l'acide méthacrylique avec les alcools en C₁-C₁₂ hydrogénés ou fluorés, de préférence C₁-C₈. Parmi les composés de ce type, on peut citer : l'acrylate de méthyle, l'acrylate d'éthyle, l'acrylate de propyle, l'acrylate de n-butyle, l'acrylate d'isobutyle, l'acrylate de 2-éthylhexyle, l'acrylate de t-butyle, le méthacrylate de méthyle, le méthacrylate d'éthyle, le méthacrylate de n-butyle, le méthacrylate d'isobutyle.

Les nitriles vinyliques incluent plus particulièrement ceux ayant de 3 à 12 atomes de carbone, comme en particulier l'acrylonitrile et le méthacrylonitrile.

Pour la préparation de bloc polyvinylamines, on utilise de préférence à titre de monomères éthyléniquement insaturés les amides de la vinylamine, par exemple le vinylformamide ou le vinylacétamide. Puis, le polymère obtenu est hydrolysé à pH acide ou basique.

Pour la préparation de bloc polyalcoolvinyliques, on utilise de préférence à titre de monomères éthyléniquement insaturés les esters vinyliques d'acide carboxylique, comme par exemple l'acétate de vinyle. Puis, le polymère obtenu est hydrolysé à pH acide ou basique.

Les types et quantités de monomères polymérisables mis en oeuvre selon la présente invention varient en fonction de l'application finale particulière à laquelle est destiné le polymère. Ces variations sont bien connues et peuvent être facilement déterminées par l'homme du métier.

Ces monomères éthyléniquement insaturés peuvent être utilisés seuls ou en mélanges.

Selon un mode de réalisation particulier, dans le procédé de préparation d'un polymère de première génération, le monomère éthyléniquement insaturé correspond à la formule CXX' (= CV - CV')_{b} = CH₂ dans laquelle
- V, V', identiques ou différents, représentent : H, un groupe alkyle ou un halogène,
- X, X', identiques ou différents, représentent H, un halogène ou un groupe R⁴, OR⁴, O₂COR₄, NHCOH, OH, NH₂, NHR₄, N(R⁴)₂, (R⁴)₂N⁺O⁻, NHCOR⁴, CO₂H, CO₂R⁴, CN, CONH₂, CONHR⁴ ou CON(R⁴)₂, dans lesquels R⁴ est choisi parmi les groupes alkyle, aryle, aralkyle, alkaryle, alcène ou organosilyle, éventuellement perfluorés et éventuellement substitués par un ou plusieurs groupes carboxyle, époxy, hydroxyle, alkoxy, amino, halogène ou sulfonique, et
- b est 0 ou 1.

La polymérisation peut être réalisée en masse, en solution; en émulsion, en dispersion ou en suspension. De préférence, elle est mise en oeuvre en solution ou en émulsion.

De préférence, le procédé est mis en oeuvre de manière semi-continue.

Le composé (II) peut être présent dans le milieu de polymérisation dès le début de la réaction. Il peut aussi être ajouté au cours de la polymérisation.

La température peut varier entre la température ambiante et 150°C selon la nature des monomères utilisés.

En général, au cours de la polymérisation, la teneur instantanée en polymère par rapport à la quantité instantanée en monomère et polymère est comprise entre 50 et 99 % en poids, de préférence entre 75 et 99 %, encore plus préférentiellement entre 90 et 99 %. Cette teneur est maintenue, de manière connue, par contrôle de la température, de la vitesse d'addition des réactifs et éventuellement de l'initiateur de polymérisation.

Généralement, le procédé est mis en oeuvre en l'absence de source UV, par amorçage thermique.

On peut mettre en oeuvre le procédé de l'invention à partir d'un mélange de monomères éthyléniquement insaturés. On obtient dans ce cas un polymère de première génération statistique. En sélectionnant des monomères de natures particulières, par exemple des monomères hydrophiles et des monomères hydrophobes et la quantité de chacun de ces monomères dans le bloc, on obtient un bloc ayant des propriétés particulières. Ce mode opératoire est particulièrement intéressant lorsque le polymère de première génération ainsi obtenu est un intermédiaire dans la préparation d'un copolymère à blocs.

A partir de la composition de la présente invention contenant un composé(I) de formule (IA) ou (IB) avec p égal à 1 et des monomères éthyléniquement insaturés correspondant à la formule CXX' (= CV - CV')_{b} = CH₂, définie précédemment on obtient un polymère de première génération de formule (P1): 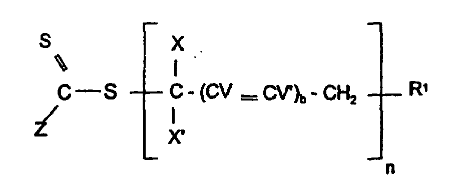
avec n supérieur ou égal à 1, Z, X, X', V, V', b et R¹ étant tel que définis précédemment

La présente invention concerne aussi un procédé de préparation d'un copolymère à blocs de Nième génération, par polymérisation radicalaire, N étant supérieur ou égal à 2, qui comprend :
- une première étape de polymérisation radicalaire obtenue à partir d'une composition comprenant
   - au moins un monomère éthyléniquement insaturé,
   - une source de radicaux libres,
   - au moins un composé (I) de formule générale (IA) ou (IB),
- un nombre N-1 d'étapes de polymérisation radicalaire, chacune de ces étapes étant mise en oeuvre à partir d'une composition comprenant :
   - au moins un monomère éthyléniquement insaturé,
   - une source de radicaux libres, et
   - le polymère obtenu à l'étape de polymérisation précédente,

le ou les monomères éthyléniquement insaturés dans chacune des étapes étant tels que le bloc formé à une étape est de nature différente du bloc formé à l'étape précédente, et la première étape de polymérisation et/ou les étapes suivantes de polymérisation sont mises en oeuvre en présence d'au moins un composé de formule (II).

Par exemple, on peut obtenir un copolymère à blocs de deuxième génération par un procédé qui comprend la polymérisation radicalaire d'une composition comprenant :
- au moins un monomère éthyléniquement insaturé,
- une source de radicaux libres, et
- le polymère de première génération obtenu par polymérisation radicalaire de la composition contenant une source de radicaux libres, les composés (I) et (II) et un monomère éthyléniquement insaturé,

les monomères éthyléniquement insaturés permettant l'obtention du deuxième bloc étant tels que le bloc est de nature différente du polymère de première génération.

Selon un mode de réalisation de l'invention, (1) on synthétise un polymère de première génération à partir d'une composition comprenant un ou plusieurs monomères éthyléniquement insaturés, d'une source de radicaux libres, d'un composé de formule (IA) et/ou (IB) et d'un composé (II), et ensuite (2) on utilise le polymère de première génération obtenu à l'étape (1) pour préparer un copolymère diblocs (de deuxième génération) par mise en contact de ce polymère de première génération avec un ou plusieurs monomères éthyléniquement insaturés et une source de radicaux libres, le bloc obtenu à l'étape (2) étant de nature différente du polymère de première génération de l'étape (1). Selon un mode particulier de réalisation, l'étape (2) peut être mise en oeuvre en présence du composé (II).

Cette étape (2) peut être répétée avec de nouveaux monomères et le copolymère dibloc obtenu pour synthétiser un nouveau bloc et obtenir un copolymère tribloc.

On peut ainsi répéter autant de fois que nécessaire l'étape de polymérisation à partir d'un copolymère à blocs pour obtenir un copolymère avec un bloc supplémentaire.

Le procédé de l'invention permet notamment d'obtenir un copolymère dibloc de formule générale (P2) : 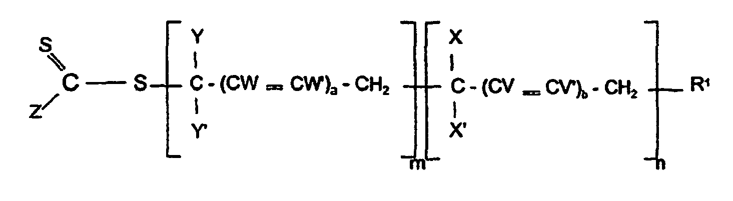
à partir d'une composition contenant une source de radicaux libres, un polymère (P1) tel que défini précédemment et un monomère éthyléniquement insaturé de formule CYY'(=CW-CW')ₐ=CH₂,
dans lesquelles
- n et m, identiques ou différents, sont supérieurs ou égaux à 1,
- W et W, identiques ou différents, représentent : H, un groupe alkyle ou un halogène,
- Y et Y', identiques ou différents, représentent H, un halogène ou un groupe R⁴, OR⁴, O₂COR⁴, NHCOH, OH, NH₂, NHR⁴, N(R⁴)₂, (R⁴)₂N⁺O⁻, NHCOR⁴, CO₂H, CO₂R⁴, CN, CONH₂, CONHR⁴ ou CON(R⁴)₂, dans lesquels R⁴ est choisi parmi les groupes alkyle, aryle, aralkyle, alkaryle, alcène ou organosilyle, éventuellement perfluorés et éventuellement substitués par un
ou plusieurs groupes carboxyle, époxy, hydroxyle, alkoxy, amino, halogène ou sulfonique, et
- a et b, identiques ou différents, valent 0 ou 1,
- V, V', X, X', Z, Z¹ et R¹ sont tels que définis précédemment.

Les monomères éthyléniquement insaturés qui sont utiles sont ceux décrits précédemment.

Le procédé ci-dessus est décrit à partir d'un polymère (P1) obtenu à partir d'un composé (I) avec p égal à 1 cependant cet enseignement est directement applicable aux polymères obtenus à partir des composés (I) de formule (IA) et/ou (IB) avec p supérieur à1.

Les composés de formule (IA) et (IB) lorsque p est supérieur à 1 sont particulièrement intéressants car ils permettent de faire croître une chaîne polymère sur au moins deux sites actifs. Avec ce type de composés, il est possible d'économiser des étapes de polymérisation pour obtenir un copolymère à n blocs. Ainsi, si p vaut 2 dans la formule (IA) ou (IB), le premier bloc est obtenu par polymérisation d'un monomère M1 en présence du composé de formule (IA) ou (IB). Ce premier bloc peut ensuite croître à chacune de ses extrémités par polymérisation d'un deuxième monomère M2. Un copolymère tribloc est obtenu, ce copolymère tribloc peut, lui-même, croître à chacune de ses extrémités par polymérisation d'un troisième monomère M3. Ainsi, un copolymère "pentabloc" est obtenu en seulement trois étapes. Si p est supérieur à 2, le procédé permet d'obtenir des homopolymères ou des copolymères à blocs dont la structure est "multi-bras" ou en étoile.

Selon ce procédé de préparation de polymères à blocs, lorsque l'on souhaite obtenir des polymères à blocs homogènes et non à gradient de composition, et si toutes les polymérisations successives sont réalisées dans le même réacteur, il est essentiel que tous les monomères utilisés lors d'une étape aient été consommés avant que la polymérisation de l'étape suivante ne commence, donc avant que les nouveaux monomères ne soient introduits.

Lorsque l'on veut obtenir un bloc statistique, l'étape de polymérisation est mise en oeuvre avec une composition contenant un mélange de monomères éthyléniquement insaturés.

Les polymères obtenus selon le procédé de l'invention présentent un indice de polydispersité faible et une masse moléculaire contrôlée. L'indice de polydispersité est d'au plus 2, de préférence d'au plus 1,5.

Selon un mode de réalisation particulier, les polymères à blocs comprennent au moins deux blocs polymères choisis parmi les associations suivantes :
- polystyrène/polyacrylate de méthyle
- polystyrène/polyacrylate d'éthyle,
- polystyrènelpolyacrylate de tertiobutyle,
- polyacrylate d'éthyle/polyacétate de vinyle,
- polyacrylate de butyle/polyacétate de vinyle
- polyacrylate de tertiobutyle/polyacétate de vinyle.

Un des blocs peut aussi être constitué d'un copolymère statistique obtenu à partir d'un mélange de monomères éthyléniquement insaturés.

Selon un mode de réalisation particulier, on prépare en une seule étape en copolymère dibloc contenant un bloc homopolymère et un deuxième bloc copolymère statistique en introduisant dans le milieu de réaction un deuxième monomère alors que le premier monomère n'est pas complètement consommé, l'ajout du deuxième monomère étant effectué après consommation complète du composé (I).

Ce mode de réalisation est particulièrement avantageux avec le procédé de l'invention qui permet par la présence du composé (II) d'augmenter la vitesse de consommation du composé (I).

Selon un mode de réalisation particulier, les extrémités réactives du polymère à blocs peuvent être clivées pour former un polymère dont les extrémités sont des thiols ou des atome d'hydrogène. Ces modifications peuvent être mises en oeuvre par réduction et/ou hydrolyse.

Les exemples suivants illustrent l'invention sans toutefois en limiter la portée.

### EXEMPLES:

Dans la suite des exemples, la masse moléculaire Mₙ est mesurée par chromatographie par perméation de gel (CPG).
a- la masse moyenne en nombre théorique M_{n th} est égale à
   ([M]₀/[A]₀) x conversion + MW(A), dans laquelle [M]₀ est la concentration initiale en monomère, [A]₀ est la concentration initiale en xanthate A, MW(A) est la masse moléculaire de A. M_{n th} décrit une consommation complète du xanthate A en début de réaction et une contribution négligeable des chaînes amorcées par l'amorceur radicalaire.

### Exemple 1 : Synthèse du S-propionyl O-ethyl xanthate CK₃CH(CO₂CH₃)S(C=S)OEt (A)

5 g (0,04 mol) de methylchloropropionate CH₃CH(CO₂CH₃)Cl sont dissous dans 10 ml d'acétone et 7,2 g (0,045 mol) de sel de potassium de l'acide xanthique EtO(C=S)S⁻K⁺ sont ajoutés par portions pendant 30 minutes. Le mélange réactionnel est agité pendant 1 heure. Le produit est ensuite extrait à l'éther, lavé par une solution aqueuse de NaCl, puis par de l'eau. Le produit est ensuite séché sur MgSO₄ et le solvant est évaporé sous vide. 7,5 g (88%) de produit A sont obtenus.

### Exemple 2 : Synthèse du S-propionyl O-trifluoroéthyl xanthate CH₃CH(CO₂CH₃)S(C=S)OCH₂CF₃ (B)

Dans un ballon en verre, on met 2 g (20 mmol) de trifluoroéthanol en solution dans 40 ml de DMF. On ajoute 2,4 ml (40 mmol) de CS₂. La solution est refroidie à 0°C, puis on ajoute 0,96 g (20 mmol) de NaH. Après 1 heure d'agitation à 0°C, on ajoute 2,34 ml (18 mmol) d'éthyl 2-bromopropionate. La solution est agitée 1 heure à 0°C, puis deux heures à température ambiante avant d'être diluée par de l'éther éthylique. Elle est ensuite lavée à l'eau, puis à la saumure. La phase organique est concentrée sous vide, puis le brut réactionnel est purifié par colonne (9/1 : heptane / acétate d'éthyle). On isole 3,4 g (69 % de rendement) de xanthate B.

### Exemple 3: Synthèse du bis O-ethyl xanthate (D_{A})

3 g (0,019 mol) de sel de potassium de l'acide xanthique EtO(C=S)S⁻X⁺ sont dissous dans 30 ml de THF anhydre. 2,4 g (0,0095 mol) de I₂ sont ensuite ajoutés par portions à 0°C. Le milieu réactionnel est agité pendant 2 heures et le produit est extrait à l'éther, lavé par une solution de Na₂O₄, puis par une solution aqueuse de NaCl, puis par de l'eau. Après séchage par MgSO₄ et évaporation du solvant sous vide, 2,1 g (93%) de bis O-ethyl xanthate sont isolés .

### Exemple 4 : Synthèse du bis O-trifluoroéthyl xanthate (D_{B})

3 g (0,014 mol) de CF₃CH₂O(C=S)S⁻K⁺ sont dissous dans 30 ml de THF anhydre. 1,96 g (0,007 mol) de I₂ sont ensuite ajoutés par portions à 0°C. Le milieu réactionnel est agité pendant 2 heures et le produit est extrait à l'éther, lavé par une solution de Na₂SO₄, puis par une solution aqueuse de NaCl, puis par de l'eau. Après séchage par MgSO₄ et évaporation du solvant sous vide, 1,54 g de produit pur (63%) sont récoltés par chromatographie sur colonne (éluant : heptane).

### Exemple 5: Polymérisation de l'acrylate d éthyle en présence de A:

0,146 g (0,7 mmol) de **A** (S-propionyl O-éthyl Xanthate), 3,4 mg (0,02 mmol) d'AlBN (azobisisobutyronitrile) et 5,5 g (55 mmol) d'acrylate d'éthyle sont dissous dans 6 ml de toluène. Des fractions de cette solution mère sont reparties dans des tubes de Carius. Le contenu de ces tubes est dégazé par trois cycles successifs de « congélation-vide-retour à l'ambiante ». Les tubes sont ensuite scellés sous vide à la flamme. Les tubes sont ensuite placés dans un bain thermostaté à 80°C. Ils sont retirés à des intervalles de temps réguliers, puis ouverts et leur contenu est analysé.

Dans le tableau suivant, on a reporté l'évolution de la masse molaire moyenne en nombre (Mₙ) ainsi que l'indice de polymolécularité (M_{w}Mₙ) en fonction de la conversion en monomère.

| | | | | |
|---|---|---|---|---|
| | Conversion (%) | Mₙ (g/mol) | M_{n th}(g/mol)^{a} | M_{w}/Mₙ |
| 1 | 4,4 | 5130 | 560 | 1,71 |
| 2 | 11,6 | 5710 | 1140 | 1,81 |
| 3 | 18,2 | 6060 | 1670 | 1,70 |
| 4 | 41 | 6745 | 3490 | 1,72 |
| 5 | 96,5 | 7290 | 7940 | 1,77 |

### Exemple 6: Polymérisation de l'acrylate d éthyle en présence de A et de D_{A} (2%)

On reproduit le mode opératoire de l'exemple 5 dans lequel 3,41 mg (0,014 mmol) de bis O-ethyl xanthate **D**_{**A**} sont rajoutés à la solution mère (2% en mole par rapport au composé A). Les résultats obtenus sont reportés dans le tableau suivant :

| | | | | |
|---|---|---|---|---|
| | Conversion (%) | Mₙ (g/mol) | M_{n th} (g/mol)^{a} | M_{w}/Mₙ |
| 1 | 4,1 | 3600 | 540 | 2,37 |
| 2 | 10,2 | 4000 | 1020 | 2,14 |
| 3 | 14,4 | 4100 | 1360 | 2,25 |
| 4 | 45,7 | 5200 | 3870 | 2,11 |
| 5 | 76,7 | 7050 | 6350 | 1,89 |

### Exemple 7: Polymérisation de l'acrylate d éthyle en présence de A et de D_{A} (5 %)

On reproduit le mode opératoire de l'exemple 5 dans lequel 8,53 mg (0,035 mmol) de bis O-ethyl xanthate **D**_{**A**} sont rajoutés à la solution mère (5% en mole par rapport au xanthate A). Les résultats sont reportés dans le tableau suivant :

| | | | | |
|---|---|---|---|---|
| | Conversion (%) | Mₙ (g/mol) | M_{n th} (g/mol)^{a} | M_{w}/Mₙ |
| 1 | 2,6 | 2340 | 420 | 2,66 |
| 2 | 11,9 | 2880 | 1160 | 2,66 |
| 3 | 77,4 | 6232 | 6410 | 1,93 |

### Exemple 8: Polymérisation de l'acrylate d éthyle en présence de A et de D_{A} (10 %)

On reproduit le mode opératoire de l'exemple 5 dans lequel 17,06 mg (0,070 mmol) de bis O-ethyl xanthate **D**_{**A**} sont rajoutés à la solution mère (10% en mole par rapport au xanthate A). Les résultats sont reportés dans le tableau ci-dessous :

| | | | | |
|---|---|---|---|---|
| | Conversion (%) | Mₙ (g/mol) | M_{n th}(g/mol)^{a} | M_{w}/Mₙ |
| 1 | 1,9 | 1960 | 360 | 2,39 |
| 2 | 10,1 | 3100 | 1020 | 2,35 |
| 3 | 25,7 | 4800 | 2270 | 2,01 |
| 4 | 71,8 | 5900 | 5960 | 1,88 |

### Exemple 9: Polymérisation de l'acrylate d éthyle en présence de A et de D_{A} (20 %)

On reproduit l'exemple 5 dans lequel 34,1 mg (0,14 mmol) de bis O-ethyl xanthate D_{A} sont rajoutés à la solution mère (20% en mole par rapport au xanthate A). Les résultats sont reportés ci-dessous :

| | | | | |
|---|---|---|---|---|
| | Conversion (%) | Mₙ (g/mol) | M_{n th} (g/mol)^{a} | M_{w}/Mₙ |
| 1 | 2 | 1710 | 370 | 2,15 |
| 2 | 5,9 | 2460 | 680 | 2,05 |
| 3 | 15,7 | 2900 | 1470 | 2,23 |

A partir des résultats décrits dans les exemples 5 à 9, il apparaît clairement que l'addition de D_{A} permet d'obtenir un profil d'évolution de Mₙ mieux contrôlé (plus proche du profil théorique), et ceci d'autant plus que la quantité de D_{A} additionnée est importante. D_{A} active la consommation du xanthate A et donc la création des chaînes polymères générées par A.

### Exemple 10: Polymérisation du styrène en présence de A:

0,146 g (0.7.mmol) de A et 5,87 g (56,4 mmol) de styrène sont dissous dans 6,45 ml de toluène. Des fractions de cette solution mère sont reparties dans des tubes de Carius. Le contenu de ces tubes est dégazé par trois cycles successifs de « congélation-vide-retour à l'ambiante ». Les tubes sont ensuite scellés sous vide à la flamme. Les tubes sont ensuite placés dans un bain thermostaté à 110°C. Ils sont retirés à des intervalles de temps réguliers, puis ouverts et leur contenu est analysé.

Dans le tableau suivant, on a reporté l'évolution de la masse molaire moyenne en nombre (Mₙ) et de l'indice de polymolécularité (M_{w}/Mₙ) en fonction de la conversion en monomère.

| | | | | |
|---|---|---|---|---|
| | Conversion (%) | Mₙ (g/mol) | M_{n th} (g/mol)^{a} | M_{w}/Mₙ |
| 1 | 10,2 | 7970 | 1060 | 2,03 |
| 2 | 21 | 7790 | 1960 | 2,09 |
| 3 | 34 | 8030 | 3040 | 2,05 |
| 4 | 49 | 8250 | 4290 | 1,97 |
| 5 | 76,3 | 8150 | 6570 | 2,01 |

### Exemple 11: Polymérisation du styrène en présence de A et de D_{A} (5 %)

On reproduit le mode opératoire de l'exemple 10 dans lequel 8,53 mg (0,035 mmol) de bis O-ethyl xanthate **D**_{**A**} sont rajoutés à la solution mère (5% en mole par rapport au xanthate A). Les résultats sont reportés ci-dessous :

| | | | | |
|---|---|---|---|---|
| | Conversion (%) | Mₙ (g/mol) | M_{n th} (g/mol)^{a} | M_{w}/Mₙ |
| 1 | 12,6 | 3400 | 1260 | 3,05 |
| 2 | 45 | 5400 | 3960 | 2,73 |
| 3 | 48,8 | 6400 | 4280 | 2,44 |
| 4 | 92,5 | 8100 | 7930 | 2,06 |

A partir des résultats décrits dans les exemples 10 et 11, il apparaît clairement que l'addition de D_{A} permet d'obtenir un profil d'évolution de Mₙ mieux contrôlé (plus proche du profil théorique). La comparaison des tableaux des exemples 10 et 11 pour des taux de conversation faibles montre que l'addition de 5% de D_{A} permet d'accélérer la création des chaînes issues de A (les chaînes sont créées environ deux fois plus rapidement en se basant sur les valeurs de Mₙ).

### Exemple 12: Polymérisation de l'acrylate d'éthyle en présence de B

0,190 g (0,69 mmol) de B, 3.4 mg (0,02 mmol) d'AlBN et 5,5 g (55 mmol) d'acrylate d'éthyle sont dissous dans 6 ml de toluène. Des fractions de cette solution mère sont reparties dans des tubes de Carius. Le contenu de ces tubes est dégazé par trois cycles successifs de « congélation-Vide-retour à l'ambiante ». Les tubes sont ensuite scellés sous vide à la filamme. Les tubes sont ensuite placés dans un bain thermostaté à 80°C. Ils sont retirés à des intervalles de temps réguliers, puis ouverts et leur contenu est analysé.

Dans le tableau suivant, on a reporté l'évolution de la masse molaire moyenne en nombre (Mₙ) et de l'indice de polymolécularité (M_{w}/Mₙ) en fonction de la conversion en monomère.

| | | | | |
|---|---|---|---|---|
| | Conversion (%) | Mₙ (g/mol) | M_{n th}(g/mol)^{a} | M_{w}/Mₙ |
| 1 | 4,2 | 2790 | 610 | 1,98 |
| 2 | 11 | 2940 | 1160 | 2,00 |
| 3 | 25,7 | 3600 | 2330 | 1,81 |

### Exemple 13: Polymérisation de l'acrylate d éthyle en présence de B et de D_{B} (5 %)

On reproduit le mode opératoire de l'exemple 12 dans lequel 12 mg (0,034 mmol) de bis O-ethyl xanthate **D**_{**B**} sont rajoutés à la solution mère (5% en mole par rapport au xanthate B). Les résultats sont reportés dans le tableau suivant :

| | | | | |
|---|---|---|---|---|
| | Conversion (%) | Mₙ (g/mol) | M_{n th}(g/mol)^{a} | M_{w}/Mₙ |
| 1 | 0,9 | 1830 | 350 | 1,78 |
| 2 | 1,3 | 1800 | 380 | 1,87 |
| 3 | 4,1 | 1960 | 605 | 1,96 |

A partir des résultats décrits dans les exemples 12 et 13, il apparaît clairement que l'addition de D_{B} permet d'obtenir un profil d'évolution de Mₙ mieux contrôlé (plus proche du profil théorique). Pour un taux de conversion comparable (environ 4 %), Mₙ est plus proche des valeurs théoriques en présence de D_{B}.

## Revendications

1. Procédé de préparation d'un polymère de première génération qui comprend une étape de polymérisation radicalaire d'une composition comprenant :
- au moins un monomère éthyléniquement insaturé,
- une source de radicaux libres,
- au moins un composé (I) de formule générale (IA) ou (IB) : 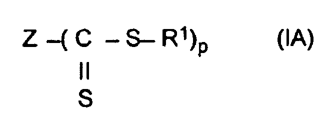 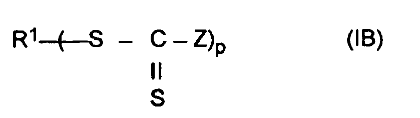
- un composé de formule (II) 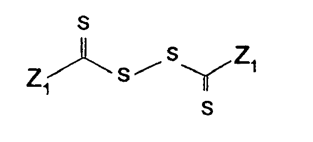
dans lesquelles
• R¹ représente un groupe choisi parmi les groupes alkyle, acyle, aryle, aralkyle, alcène ou alcyne, les cycles carbonés ou les hétérocycles, saturé ou non, aromatique ou une chaîne polymère,
• Z et Z₁, identique ou différent, représentent un groupe choisi parmi
- les groupes alkyle, acyle, aryle, aralkyle, alcène ou alcyne, les cycles carbonés ou les hétérocycles, saturé ou non, ou aromatique, éventuellement substitué,
- le groupe -OR² dans lequel R² est un groupe alkyle, acyle, aryle, aralkyle, alcène ou alcyne, un cycle carboné ou un hétérocycle, saturé ou non, aromatique, une chaîne polymère, -CH₂CₙF₂ₙ₊₁ avec n compris entre 1 et 20, un groupe -CR⁵R⁶PO(OR⁷)₂ dans lequel R⁵ et R⁶, sont chacun séparément, un atome d'hydrogène, un halogène, un groupe alkyle, un groupe hétérocyclique, un groupe -NO₂, -SO₃R⁸, -NCO, CN, R⁸, -OR⁸, -SR⁸, -NR⁸₂, -COOR⁸, O₂CR⁸, -CONR⁸₂, -NCOR⁸₂, CₙF₂ₙ₊₁ avec n compris entre 1 et 20, R⁸, identiques ou différents étant choisi parmi un groupe comprenant les groupes alkyle, alcényle, alcynyle, cycloalcényle, cycloalcynyle, aryle, éventuellement condensé à un hétérocycle aromatique ou non, alkaryle, aralkyle, hétéroaryle, R⁸ pouvant être substitué par un ou plusieurs groupes identiques ou différents choisis parmi halogène, =O, =S, OH, alcoxy, SH, thioalcoxy, NH2, mono ou di-alkylamino, CN, COOH, ester, amide, CₙF2ₙ₊₁, avec n compris entre 1 et 20, et/ou éventuellement interrompu par un ou plusieurs atomes choisis parmi O, S, N, P, ou R⁵ et R⁶ forment ensemble avec l'atome de carbone auxquels ils sont attachés un groupe =O ou =S ou un cycle hydrocarboné ou un hétérocycle, R⁷ , identique ou différent, représente un groupe R⁸ tel que défini précédemment ou forment ensemble une chaîne hydrocarboné en C₂-C₄, éventuellement interrompu par un hétéroatome choisi parmi O, S et N ;
- le groupe -NR³R⁴ dans lequel R³ et R⁴, identiques ou différents, sont choisis choisi parmi les groupes, éventuellement substitués, alkyle, acyle, aryle, aralkyle, alcène ou alcyne, les cycles carbonés ou les hétérocycles, saturé ou non, ou aromatique, éventuellement substitué et R³ et R⁴ ensemble forment un cycle éventuellement substitué contenant au moins 5 chaînons, avec la condition supplémentaire que R³ et R⁴ induisent un effet de délocalisation ou électro-attracteur vis-à-vis de la densité électronique de l'atome d'azote
• p est un nombre entier supérieur ou égal à 1.

2. Procédé selon la revendication 1 dans lequel la quantité de composé (II) est comprise entre 0,1 et 20 % en mole par rapport au nombre de mole de composé (I).

3. Procédé selon l'une quelconque des revendications 1 ou 2 dans lequel Z est choisi parmi les groupes alkyle, halogénoalkyle, phényle, alcène, alcyne.

4. Procédé selon l'une quelconque des revendications 1 ou 2 dans lequel Z est -OR dans lequel R² est un groupe alkyle.

5. Procédé selon l'une quelconque des revendications 1 ou 2 dans lequel Z est -NR³R⁴ dans lequel R³ et R⁴, identiques ou différents, sont un groupe alkyle.

6. Procédé selon l'une quelconque des revendications 1 à 5 dans lequel R¹ est un groupe alkyle substitué.

7. Procédé selon l'une quelconque des revendications 1 à 6 dans lequel la constante de transfert du composé (I) vis à vis du monomère est inférieure à 10.

8. Procédé selon la revendication 7 dans lequel la constante de transfert du composé (I) vis à vis du monomère est inférieure à 1.

9. Procédé selon l'une quelconque des revendications 1 à 8 dans lequel le ou les monomères éthyléniquement insaturés correspondent à la formule
CXX' (= CV - CV')_{b} = CH₂,
dans laquelle :
- V, V', identiques ou différents, représentent : un atome d'hydrogène, un groupe alkyle ou un halogène,
- X, X', identiques ou différents, représentent H, un halogène ou un groupe R⁴, OR⁴, O₂COR⁴, NHCOH, OH, NH₂, NHR⁴, N(R⁴)₂, (R⁴)₂N⁺O⁻, NHCOR⁴, CO₂H, CO₂R⁴, CN, CONH₂, CONHR⁴ ou CON(R⁴)₂, dans lesquels R⁴ est choisi parmi les groupes alkyle, aryle, aralkyle, alkaryle, alcène ou organosilyle, éventuellement perfluorés et éventuellement substitués par un ou plusieurs groupes carboxyle, époxy, hydroxyle, alkoxy, amino, halogène ou sulfonique,
- b est 0 ou 1.

10. Procédé de préparation d'un copolymère à blocs de Nième génération par polymérisation radicalaire, N étant supérieur ou égal à 2, qui comprend :
- une première étape de polymérisation radicalaire pour former un polymère de première génération à partir d'une composition comprenant :
- au moins un monomère éthyléniquement insaturé,
- une source de radicaux libres,
- au moins un composé (I) de formule générale (IA) ou (IB),
- un nombre N-1 étapes de polymérisation radicalaire, chacune de ces étapes étant mise en oeuvre à partir d'une composition comprenant :
- au moins un monomère éthyléniquement insaturé,
- une source de radicaux libres, et
- le polymère obtenu à l'étape de polymérisation précédente,
le ou les monomères éthyléniquement insaturés étant tels que le bloc formé à cette étape est de nature différente du bloc formé à l'étape précédente, et la première étape de polymérisation et/ou les étapes suivantes de polymérisation sont mises en oeuvre en présence d'au moins un composé de formule (II), les composés (I) de formules (IA), (IB) et les composés (II) étant tels que définis dans l'une quelconque des revendications 1 à 9.

11. Procédé selon la revendication 10 dans lequel la première étape de polymérisation est mise en oeuvre en présence du composé (II).

12. Procédé selon la revendication 10 ou 11 dans lequel au moins une des N-1 étapes est mise en oeuvre en présence du composé (II)

13. Procédé selon la revendication 10, 11 ou 12 de préparation d'un copolymère à blocs de deuxième génération qui comprend la polymérisation radicalaire d'une composition comprenant :
- au moins un monomère éthyléniquement insaturé,
- une source de radicaux libres, et
- le polymère de première génération.

14. Procédé selon l'une quelconque des revendications précédentes 1 à 13 dans lequel le monomère éthyléniquement insaturé est choisi parmi le styrène ou ses dérivés, les diènes, les esters (méth)acryliques, les nitriles vinyliques, les esters vinyliques.

15. Procédé selon la revendication 13 dans lequel le copolymères à blocs de deuxième génération comprend deux blocs choisis parmi les associations suivantes :
- polystyrènelpolyacrylate de méthyle
- polystyrène/polyacrylate d'éthyle,
- polystyrène/polyacrylate de tertiobutyle,
- polyacrylate d'éthyle/polyacétate de vinyle,
- polyacrylate de butyle/polyacétate de vinyle
- polyacrylate d'éthyle/polyacrylate de tertiobutyle,
- polyacrylate de tertiobutyle/polyacétate de vinyle,
- polyacrylate d'éthyle/polyacrylate de butyle,
- polyacrylate de butyle/alcool polyvinylique,
- polyacide acrylique/alcool polyvinylique.

16. Procédé selon la revendication 13 dans lequel le copolymère de deuxième génération comprend au moins un bloc constitué d'un polymère statistique obtenu à partir d'un mélanges de monomères éthyléniquement insaturés.

## Patentansprüche

1. Verfahren zur Herstellung eines Polymers der ersten Generation, das einen Schritt zur radikalischen Polymerisation einer Zusammensetzung umfasst, die enthält:
- wenigstens ein ethylenisch ungesättigtes Monomer,
- eine Quelle für freie Radikale,
- wenigstens eine Verbindung (I) der allgemeinen Formel (IA) oder (IB): 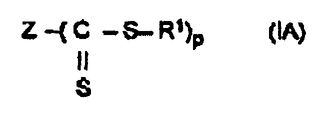 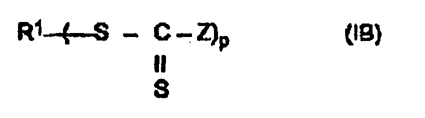
- eine Verbindung der Formel (II) 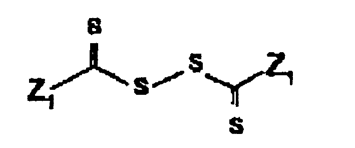
worin
• R¹ eine Gruppe darstellt, die ausgewählt ist unter den Gruppen Alkyl, Acyl, Aryl, Aralkyl, Alken oder Alkin, den gesättigten oder ungesättigten, aromatischen Carbocyclen oder Heterocyclen oder einer Polymerkette,
• Z und Z₁, die gleich oder verschieden sind, eine Gruppe darstellen, die ausgewählt ist unter
- den Gruppen Alkyl, Acyl, Aryl, Aralkyl, Alken oder Alkin, den gesättigten oder ungesättigten oder aromatischen Carbocyclen oder Heterocyclen, gegebenenfalls substituiert;
- der Gruppe -OR², worin R² eine Gruppe Alkyl, Acyl, Aryl, Aralkyl, Alken oder Alkin, ein gesättigter oder ungesättigter, aromatischer Carbocyclus oder Heterocyclus, eine Polymerkette, -CH₂CₙF₂ₙ₊₁ mit n zwischen 1 und 20, eine Gruppe -CR⁵R⁶PO(OR⁷)₂ ist, worin R⁵ und R⁶ jeweils getrennt ein Wasserstoffatom, ein Halogen, eine Alkylgruppe, eine heterocyclische Gruppe, eine Gruppe -NO₂, -SO₃R⁸, -NCO, CN, R⁸, -OR⁸, -SR⁸, -NR⁸₂, -COOR⁸, O₂CR⁸, -CONR⁸₂, -NCOR⁸₂, CₙF₂ₙ₊₁ mit n zwischen 1 und 20 sind, wobei R⁸, gleich oder verschieden, ausgewählt ist aus einer Gruppe, die die Gruppen Alkyl, Alkenyl, Alkinyl, Cycloalkenyl, Cycloalkinyl, Aryl, gegebenenfalls kondensiert an einen aromatischen oder nicht aromatischen Heterocyclus, Alkaryl, Aralkyl, Heteroaryl umfasst, wobei R⁸ substituiert sein kann mit einer oder mehreren gleichen oder verschiedenen Gruppen, die ausgewählt sind unter Halogen, =O, =S, OH, Alkoxy, SH, Thioalkoxy, NH₂, Mono- oder Dialkylamino, CN, COOH, Ester, Amid, CₙF₂ₙ₊₁ mit n zwischen 1 und 20, und/oder gegebenenfalls unterbrochen sein kann von einem oder mehreren Atomen, die ausgewählt sind unter O, S, N, P, oder R⁵ und R⁶ zusammen mit dem Kohlenstoffatom, an das sie gebunden sind, eine Gruppe =O oder =S oder einen Kohlenwasserstoffring oder einen Heterocyclus bilden, R⁷, gleich oder verschieden, eine Gruppe R⁸, wie zuvor definiert, darstellt, oder zusammen eine C₂-C₄₋Kohlenwasserstoffkette, die gegebenenfalls von -einem Heteroatom, das ausgewählt ist unter O, S und N, unterbrochen ist, bilden;
- der Gruppe -NR³R⁴, worin R³ und R⁴, die gleich oder verschieden sind, ausgewählt sind unter den gegebenenfalls substituierten Gruppen Alkyl, Acyl, Aryl, Aralkyl, Alken oder Alkin, den gegebenenfalls substituierten, gesättigten oder nicht gesättigten oder aromatischen Carbocyclen oder Heterocyclen, und R³ und R⁴ zusammen einen gegebenenfalls substituierten Ring mit wenigstens 5 Ringgliedern bilden mit der zusätzlichen Bedingung, dass R³ und R⁴ zu einer delokalisierenden oder elektronenziehenden Wirkung auf die Elektronendichte des Stickstoffatoms führen;
• p eine ganze Zahl größer oder gleich 1 ist.

2. Verfahren gemäß Anspruch 1, bei dem die Menge an Verbindung (II), bezogen auf die Anzahl an Molen an Verbindung (I), zwischen 0,1 und 20 Mol-% liegt.

3. Verfahren gemäß einem der Ansprüche 1 oder 2, bei dem Z aus den Gruppen Alkyl, Halogenalkyl, Phenyl, Alken, Alkin ausgewählt ist.

4. Verfahren gemäß einem der Ansprüche 1 oder 2, bei dem Z -OR² ist, worin R² eine Alkylgruppe ist.

5. Verfahren gemäß einem der Ansprüche 1 oder 2, bei dem Z -NR³R⁴ ist, worin R³ und R⁴, die gleich oder verschieden sind, eine Alkylgruppe sind.

6. Verfahren gemäß einem der Ansprüche 1 bis 5, bei dem R¹ eine substituierte Alkylgruppe ist.

7. Verfahren gemäß einem der Ansprüche 1 bis 6, bei dem die Übertragungskonstante der Verbindung (I) gegenüber dem Monomer kleiner als 10 ist.

8. Verfahren gemäß Anspruch 7, bei dem die Übertragungskonstante der Verbindung (I) gegenüber dem Monomer kleiner als 1 ist.

9. Verfahren gemäß einem der Ansprüche 1 bis 8, bei dem das oder die ethylenisch ungesättigten Monomere der Formel
CXX' (=CV - CV')_{b} = CH₂
entsprechen, worin
- V, V', die gleich oder verschieden sind, ein Wasserstoffatom, eine Alkylgruppe oder ein Halogen darstellen,
- X, X', die gleich oder verschieden sind, H, ein Halogen oder eine Gruppe R⁴, OR⁴, O₂COR⁴, NHCOH, OH, NH₂, NHR⁴, N(R⁴)₂, (R⁴)₂N⁺O⁻, NHCOR⁴, CO₂H, CO₂R⁴, CN, CONH₂, CONHR⁴ oder CON(R⁴)₂ darstellen, worin R⁴ ausgewählt ist aus den Gruppen Alkyl, Aryl, Aralkyl, Alkaryl, Alken oder Organosilyl, die gegebenenfalls perfluoriert und gegebenenfalls mit einer oder mehreren Gruppen Carboxyl, Epoxy, Hydroxyl, Alkoxy, Amino, Halogen oder Sulfon substituiert sind,
- b 0 oder 1 ist.

10. Verfahren zur Herstellung eines Blockcopolymers der N-ten Generation durch radikalische Polymerisation, wobei N größer oder gleich 2 ist, das umfasst:
- einen ersten Schritt zur radikalischen Polymerisation, um ein Polymer der ersten Generation ausgehend von einer Zusammensetzung zu bilden, die enthält:
- wenigstens ein ethylenisch ungesättigtes Monomer,
- eine Quelle für freie Radikale,
- wenigstens eine Verbindung (I) der allgemeinen Formel (IA) oder (IB),
- eine Anzahl von N-1 Schritten zur radikalischen Polymerisation, wobei jeder dieser Schritte ausgehend von einer Zusammensetzung durchgeführt wird, die enthält:
- wenigstens ein ethylenisch ungesättigtes Monomer,
- eine Quelle für freie Radikale und
- das im vorherigen Polymerisationsschritt erhaltene Polymer,
wobei das oder die ethylenisch ungesättigten Monomere derart sind, dass der bei diesem Schritt gebildete Block von anderer Art als der bei dem vorherigen Schritt gebildete Block ist und der erste Polymerisationsschritt und/oder die folgenden Polymerisationsschritte in Gegenwart wenigstens einer Verbindung der Formel (II) durchgeführt werden, wobei die Verbindungen (I) der Formeln (IA), (IB) und die Verbindungen (II) wie in einem der Ansprüche 1 bis 9 definiert sind.

11. Verfahren gemäß Anspruch 10, bei dem der erste Polymerisationsschritt in Gegenwart der Verbindung (II) durchgeführt wird.

12. Verfahren gemäß Anspruch 10 oder 11, bei dem wenigstens einer der N-1 Schritte in Gegenwart der Verbindung (II) durchgeführt wird.

13. Verfahren gemäß Anspruch 10, 11 oder 12 zur Herstellung eines Blockcopolymers der zweiten Generation, das die radikalische Polymerisation einer Zusammensetzung umfasst, die enthält:
- wenigstens ein ethylenisch ungesättigtes Monomer,
- eine Quelle für freie Radikale und
- das Polymer der ersten Generation.

14. Verfahren gemäß einem der vorhergehenden Ansprüche 1 bis 13, bei dem das ethylenisch ungesättigte Monomer unter Styren oder seinen Derivaten, den Dienen, den (Meth)acrylestern, den Vinylnitrilen, den Vinylestern ausgewählt ist.

15. Verfahren gemäß Anspruch 13, bei dem das Blockcopolymer der zweiten Generation zwei Blöcke umfasst, die ausgewählt sind unter den folgenden Kombinationen:
- Polystyren / Polymethylacrylat,
- Polystyren / Polyethylacrylat,
- Polystyren / Poly-t-butylacrylat,
- Polyethylacrylat / Polyvinylacetat,
- Polybutylacrylat / Polyvinylacetat,
- Polyethylacrylat / Poly-t-butylacrylat,
- Poly-t-butylacrylat / Polyvinylacetat,
- Polyethylacrylat / Polybutylacrylat,
- Polybutylacrylat / Polyvinylalkohol,
- Polyacrylsäure / Polyvinylalkohol.

16. Verfahren gemäß Anspruch 13, bei dem das Copolymer der zweiten Generation wenigstens einen Block umfasst, der aus einem statistischen Polymer besteht, das ausgehend von einem Gemisch von ethylenisch ungesättigten Monomeren erhalten wird.

## Claims

1. Method for preparing a first generation polymer, which comprises a step of free-radical polymerization of a composition comprising:
- at least one ethylenically unsaturated monomer
- a source of free radicals,
- at least one compound (I) of general formula (IA) or (IB): 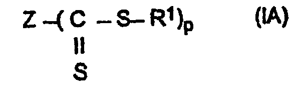 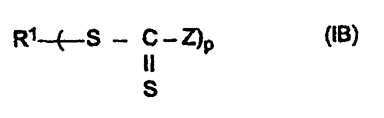
- a compound of formula (II) 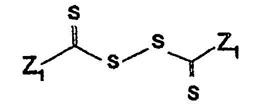
in which
• R¹ represents a group chosen from alkyl, acyl, aryl, aralkyl, alkene or alkyne groups, saturated, unsaturated or aromatic carbonaceous rings or heterocycles, or a polymer chain,
• Z and Z₁, which may be identical or different, represent a group chosen from
- alkyl, acyl, aryl, aralkyl, alkene or alkyne groups, or saturated, unsaturated or aromatic carbonaceous rings or heterocycles, which may be substituted,
- the -OR² in which R² is an alkyl, acyl, aryl, aralkyl, alkene or alkyne group, a saturated, unsaturated or aromatic carbonaceous ring or heterocycle, a polymer chain, -CH₂CₙF₂ₙ₊₁ with n between 1 and 20, or a group -CR⁵R⁶PO (OR⁷)₂ in which R⁵ and R⁶ are each separately a hydrogen atom, a halogen, an alkyl group, a heterocyclic group, a group -NO₂, -SO₃R⁸, -NCO, CN, R⁸, -OR⁸, SR⁸, -NR⁸₂, -COOR⁸, O₂CR⁸, -CONR⁸₂, -NCOR⁸₂, or CₙF₂ₙ₊₁ with n between 1 and 20, R⁸, which may be identical or different, being chosen from a group comprising the groups consisting of the following groups: alkyl, alkenyl, alkynyl, cycloalkenyl, cycloalkynyl, aryl, optionally condensed with an aromatic or nonaromatic heterocycle, alkaryl, aralkyl and heteroaryl, R⁸ possibly being substituted with one or more groups, which may be identical or different, chosen from halogen, =O, =S, OH, alkoxy, SH, thioalkoxy, NH₂, mono- or dialkylamino, CN, COOH, ester, amide, and CₙF₂ₙ₊₁ with n between 1 and 20, and/or optionally interrupted with one or more atoms chosen from O, S, N and P, or R⁵ and R⁶ formed, together with the carbon atom to which they are attached, a group =O or =S or a hydrocarbon-based ring or a heterocycle, and R⁷, which may be identical or different, represents a group R⁸ as defined above or they together form a C₂-C₄ hydrocarbon-based chain optionally interrupted with a hetero atom chosen from O, S and N;
- the group -NR³R⁴ in which R³ and R⁴ which may be identical or different, are chosen from optionally substituted alkyl, acyl, aryl, aralkyl, alkene or alkyne groups, and saturated, unsaturated or aromatic carbonaceous rings or heterocycles, which may be substituted, and R³ and R⁴ together form an optionally substituted ring containing at least 5 members, with the additional condition that R³ and R⁴ induce a delocalizing or electro-attracting effect with respect to the electron density of the nitrogen atom,
• p is an integer greater than or equal to 1.

2. Method according to Claim 1, in which the amount of compound (II) is between 0.1 and 20 mol% relative to the number of moles of compound (I).

3. Method according to either one of Claims 1 and 2, in which Z is chosen from alkyl, haloalkyl, phenyl, alkene and alkyne groups.

4. Method according to either one of Claims 1 and 2, in which Z is -OR² in which R² is an alkyl group.

5. Method according to either one of Claims 1 and 2, in which Z is -NR³R⁴ in which R³ and R⁴, which may be identical or different, are an alkyl group.

6. Method according to any one of Claims 1 to 5, in which R¹ is a substituted alkyl group.

7. Method according to any one of Claims 1 to 6, in which the transfer constant of the compound (I) with respect to the monomer is less than 10.

8. Method according to Claim 7, in which the transfer constant for the compound (I) with respect to the monomer is less than 1.

9. Method according to any one of Claims 1 to 8, in which the ethylenically unsaturated monomer(s) correspond(s) to the formula
CXX' (=CV-CV')_{b}=CH₂,
in which:
- V and V', which may be identical or different, represent: a hydrogen atom, an alkyl group or a halogen,
- X and X', which may be identical or different, represent H, a halogen or a group R⁴, OR⁴, O₂COR₄, NHCOH, OH, NH₂, NHR₄, N(R⁴)₂, (R⁴)₂N⁺O⁻, NHCRO⁴, CO₂H, CO₂R⁴, CN, CONH₂, CONHR⁴ or CON(R⁴)₂, in which R⁴ is chosen from alkyl, aryl, aralkyl, alkaryl, alkene or organosilyl groups which are optionally perfluorinated and optionally substituted with one or more carboxy, epoxy, hydroxyl, alkoxy, amino, halogen or sulphonic groups,
- b is 0 or 1.

10. Method for preparing an Nth generation block copolymer by free-radical polymerization, N being greater than or equal to, which comprises:
- a first step of free-radical polymerization so as to form a first generation polymer using a composition comprising:
- at least one ethylenically unsaturated monomer,
- a source of free radicals,
- at least one compound (I) of general formula (1A) or (IB),
- a number N-1 of free-radical polymerization steps, each of these steps being carried out using a composition comprising:
- at least one ethylenically unsaturated monomer,
- a source of free radicals, and
- the polymer obtained in the preceding polymerization step,
the ethylenically unsaturated monomer(s) being such that the block formed in this step is different in nature from the block formed in the preceding step, and the first polymerization step and/or the subsequent polymerization steps are carried out in the presence of at least one compound of formula (II), the compounds (I) of formulae (IA), (IB) and the compounds (II) being as defined in any one of Claims 1 to 9.

11. Method according to Claim 10, in which the first polymerization step is carried out in the presence of the compound (II).

12. Method according to Claim 10 or 11, in which at least one of the N-1 steps is carried out in the presence of a compound (II).

13. Method according to Claim 10, 11 or 12, for preparing a second generation block copolymer, which comprises the free-radical polymerization of a composition comprising:
- at least one ethylenically unsaturated monomer,
- a source of free radicals, and
- the first generation polymer.

14. Method according to any one of the preceding Claims 1 to 13, in which the ethylenically unsaturated monomer is chosen from styrene or derivatives thereof, dienes, (meth)acrylic esters, vinyl nitriles and vinyl esters.

15. Method according to Claim 13, in which the second generation block copolymer comprises two blocks chosen from the following combinations:
- polystyrene/poly(methyl acrylate),
- polystyrene/poly(ethyl acrylate),
- polystyrene/poly(tert-butyl acrylate),
- poly(ethyl acrylate)/poly(vinyl acetate),
- poly(butyl acrylate)/poly(vinyl acetate),
- poly(ethyl acrylate)/poly(tert-butyl acrylate),
- poly(tert-butyl acrylate)/poly(vinyl acetate),
- poly(ethyl acrylate)/poly(butyl acrylate),
- poly(butyl acrylate)/poly(vinyl alcohol),
- poly(acrylic acid)/poly(vinyl alcohol).

16. Method according to Claim 13, in which the second generation copolymer comprises at least one block consisting of a random copolymer obtained using a mixture of ethylenically unsaturated monomers.
